Europäisches Patentamt

European Patent Office

Office européen des brevets

(11) Veröffentlichungsnummer: **0 352 522**
**A1**

(12) **EUROPÄISCHE PATENTANMELDUNG**

(21) Anmeldenummer: 89112347.3

(22) Anmeldetag: 06.07.89

(51) Int. Cl.4: **B60T 8/36 , B60T 8/34**

(30) Priorität: 27.07.88 DE 3825549

(43) Veröffentlichungstag der Anmeldung:
31.01.90 Patentblatt 90/05

(84) Benannte Vertragsstaaten:
CH DE FR GB LI

(71) Anmelder: **KNORR-BREMSE AG**
**Moosacher Strasse 80 Postfach 401060**
**D-8000 München 40(DE)**

(72) Erfinder: **Roider, Willibald**
**Apothekenweg 8g**
**D-8056 Neufahrn(DE)**

(54) **Gleitschutzventil für druckluftgebremste Fahrzeuge.**

(57) Das Gleitschutzventil ist nahe seines brems-druckquellenseitigen Eingangsanschlusses 1 mit einer seinen Durchströmungsquerschnitt begrenzenden Drossel 5 versehen. An die Drossel 5 schließen sich ein Absperrventil 8 und ein Entlüftungsventil 13 sowie ein Ausgangsanschluß 2 an; das Absperrventil 8 und das Entlüftungsventil 13 sind durch je ein Membranglied 7 bzw. 12 schaltbar, welche in Schließrichtung von durch Vorsteuerventile 10 gesteuerte Schaltdrücke beaufschlagbar sind. Die durch einen Druckluftversorgungskanal 17 erfolgende Druckluftversorgung der Vorsteuerventile 10 erfolgt aus einem Eingangsraum 4, welcher sich zwischen dem Eingangsanschluß 1 und der Drossel 5, vorzugsweise zwischen einem Sieb 3 und der Drossel 5 befindet.

Durch diese Druckluftversorgung der Vorsteuerventile 10 wird gewährleistet, daß bei Druckeinbrüchen in der Drossel 5 nachgeordneten Räumen des Gleitschutzventils die Vorsteuerventile 10 doch stets mit einer ausreichend hohen Druckhöhe versorgt werden, so daß deren Schaltdrücke das Absperrventil 8 und das Entlüftungsventil 13 auch bei temperaturbedingter Steifheit bzw. Schwergängigkeit der Membranglieder 7 bzw. 12 stets sicher in deren dichte Schließstellung zu schalten vermögen.

## Gleitschutzventil für druckluftgebremste Fahrzeuge

Die Erfindung betrifft ein Gleitschutzventil für druckluftgebremste Fahrzeuge, insbesondere Schienenfahrzeuge, das in eine Verbindung von einer Bremsdruckquelle zu wenigstens einem Bremszylinder eingeordnet ist und welches nahe seines bremsdruckquellenseitigen Einganges eine seinen Durchströmungsquerschnitt begrenzende Drossel und der Drossel nachgeordnet ein Absperrventil und ein Entlüftungsventil aufweist, die beide von je einem Kolben- bzw. Membranglied schaltbar sind, wobei die Kolben- bzw. Membranglieder von durch Vorsteuerventile gesteuerten Schaltdrücken beaufschlagbar sind und die Vorsteuerventile aus einem bremsdruckquellenseitig vor dem Absperrventil befindlichen Raum durch einen Druckluftversorgungskanal druckluftversorgt sind.

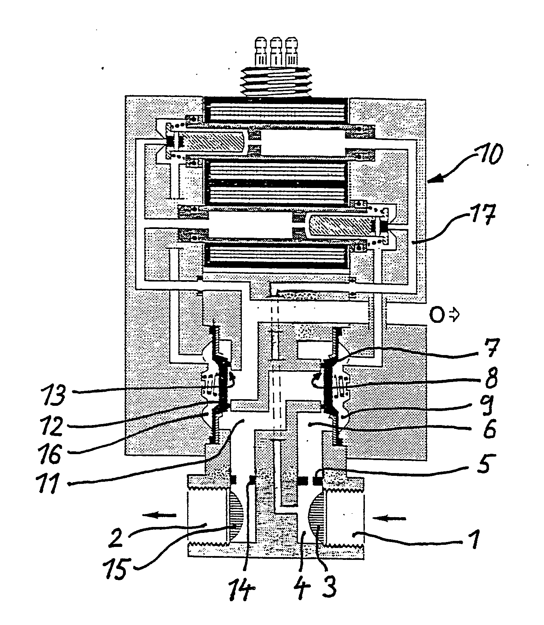

Ein derartiges Gleitschutzventil ist beispielsweise aus dem Aufsatz "Eine neue Gleitschutzgenaration für die Eisenbahn unter Verwendung von Mikroprozessoren" der Zeitschrift "Elektrische Bahnen", September 1981, Bild 10, oder der DE-OS 33 45 080, Fig.2, bekannt. Bei diesen bekannten Gleitschutzventilen mündet der Druckluftversorgungskanal in eine der Drossel nachgeordnete Beaufschlagungskammer für das Kolben- bzw. Membranglied des Absperrventils ein und wird aus dieser mit Druckluft versorgt. Während normalen Bremsungen ist das großquerschnittig ausgebildete Absperrventil geöffnet. Insbesondere bei kalter Witterung - die Gleitschutzventile werden mitunter in Temperaturbereichen von -30°C bis -40°C betrieben - mit entsprechend schwergängigen Kolben- bzw. starren und damit ebenfalls schwergängigen Membrangliedern kann es bei einem Ansprechen des Gleitschutzventils vorkommen, daß das ebenfalls großquerschnittig ausgebildete Auslaßventil sich vor einen vollständigen Schließen des Absperrventils öffnet; unter diesen Umständen tritt infolge der Wirkung der Drossel in der Beaufschlagungskammer ein starker Druckeinbruch auf, wodurch auch die Vorsteuerventile nur noch mit der eingebrochenen, niedrigen Druckhöhe druckluftversorgt werden. Von den Vorsteuerventilen können also nur relativ niedrige Schaltdrücke abgegeben werden, welche unter Berücksichtigung der erwähnten, während kalten Temperaturen möglichen Schwergängigkeit des Absperrventils nicht ausreichen, dieses dicht zu schließen. Als Folge tritt während der Ansprechzeit des Gleitschutzventils eine unkontrollierte und ungewünschte Undichtigkeit des Absperrventils auf, durch welche Druckluft von der Bremsdruckquelle durch das geöffnete Auslaßventil zur Atmosphäre abströmt. Auch beim Rückschalten des Gleitschutzventils können sich Schwierigkeiten ergeben, da beim vollen Wiederöffnen des Einlaßventils in der Beaufschlagungskammer infolge der Wirkung der Drossel einerseits und des Luftverbrauches der Bremszylinder andererseits ebenfalls ein Druckeinbruch erfolgt, welcher, wie vorstehend erwähnt, zu einer Druckluftversorgung der Vorsteuerventile mit einer niedrigen Druckhöhe führt. Das Kolbenbzw. Membranglied des Entlüftungsventils wird daher nur mit einem niedrigen, in dessen Schließrichtung wirkenden Schaltdruck beaufschlagt. Unter Berücksichtigung einer temperaturbedingten Schwergängigkeit des Entlüftungsventils besteht somit die Gefahr, daß das Entlüftungsventil nur unvollständig schließt, wodurch eine dauernde, gefährliche Entlüftung von Bremsdruck zur Atmosphäre auftreten kann.

Es ist Aufgabe der Erfindung, ein Gleitschutzventil der eingangs genannten Art derart auszubilden, daß auch bei temperaturbedingter Schwergängigkeit des Absperr- und/oder Entlüftungsventils diese in Schließrichtung stets voll bis zum Erreichen ihres dichten Schaltzustandes, geschaltet werden. Dabei soll zusätzlicher Bauaufwand möglichst vermieden werden.

Diese Aufgabe wird nach der Erfindung dadurch gelöst, daß der die Vorsteuerventile mit Druckluft versorgende Druckluftversorgungskanal an einen bremsdruckquellenseitig vor der Drossel befindlichen Eingangsraum angeschlossen ist. Hierdurch wird erreicht, daß auch bei durch irgendwelche Umstände bedingten Druckeinbrüchen in der Beaufschlagungskammer den Vorsteuerventilen doch immer Druckluft mit einem hohen, den Staudruck des Bremsdruckes vor der Drossel entsprechenden Druckhöhe zugeführt wird, so daß die von den Vorsteuerventilen ausgesteuerten Schaltdrücke eine entsprechend hohe, ein sicheres Durchschalten des Absperr- und des Entlüftungsventils in deren dichte Schließstellung bewirkende Druckhöhe aufweisen.

Falls, wie bei den eingangs erwähnten, bekannten Gleitschutzventilen vorgesehen, dem bremsdruckquellenseitigen Eingangsanschluß des Gleitschutzventils ein Sieb nachgeordnet ist, ist es nach der weiteren Erfindung zweckmäßig, wenn sich der Eingangsraum, an welchem der Druckluftversorgungskanal angeschlossen ist, zwischen dem Sieb und der Drossel befindet.

In der Zeichnung ist ein Ausführungsbeispiel für ein nach der Erfindung ausgebildetes Gleitschutzventil im Schnitt schematisch dargestellt.

Das Gleitschutzventil weist einen Eingangsanschluß 1 zum Anschluß eines nicht dargestellten, eine Bremsdruckquelle bildenden Bremsventils und einen Ausgangsanschluß 2 zum Anschluß wenigstens eines, ebenfalls nicht dargestellten Bremszylinders auf. Den Eingangsanschluß 1 ist unmittelbar ein Sieb 3 nachgeordnet, welches sich am Eingang zu einem Eingangsraum 4 befindet, an welchen sich über eine Drossel 5 eine Beaufschlagungskammer 6 für ein Membranglied 7 anschließt. Der Druck in der Beaufschlagungskammer 6 beaufschlagt das Membranglied 7 in Öffnungsrichtung eines Absperrventils 8, zu welchem das Membranglied 7 zugleich das Verschlußglied bildet. Andererseits ist das Membranglied 7 von einem in einer Beaufschlagungskammer 9 herrschenden Schaltdruck beaufschlagbar, der Schaltdruck ist von als Magnetventile ausgebildeten Vorsteuerventilen 10 gesteuert.

An das Absperrventil 8 schließt ein Zwischenraum 11 an, dessen Druck ein Membranglied 12 in Öffnungsrichtung eines Entlüftungsventils 13 beaufschlagt, zu welchen das Membranglied 12 selbst den Verschlußkörper bildet. Weiterhin ist an den Zwischenraum 11 gegenfalls über eine weitere Drossel 14 und ein Sieb 15 der Ausgangsanschluß 2 angeschlossen. In Schließrichtung des Entlüftungsventil 13 wirkend ist das Membranglied 12 durch einen vermittels der Vorsteuerventile 10 in eine Beaufschlagungskammer 16 einsteuerbaren Schaltdruck beaufschlagbar.

Zu den Vorsteuerventilen 10 führt ein Druckluftversorgungskanal 17, aus dessen Druckluft die Vorsteuerventile 10 die Schaltdrücke erstellen.

Insoweit entspricht das Gleitschutzventil in seinem Aufbau und seiner Funktion den eingangs erwähnten Gleitschutzventilen.

In Abweichung zu den bekannten Gleitschutzventilen ist das den Vorsteuerventilen 10 abgewandte Ende des Druckluftversorgungskanals 17 an den zwischen dem Sieb 3 und der Drossel 5 befindlichen Eingangsraum 4 angeschlossen und wird aus diesem mit Druckluft gespeist. Es ergibt sich hierdurch, daß, sollte durch irgendwelche Schaltvorgänge bedingt während Bremsungen in der Beaufschlagungskammer 6 ein Druckeinbruch erfolgen, welcher auch durch einen Druckabfall an der Drossel 5 zu beschreiben ist, so doch den Vorsteuerventilen 10 der sich im Eingangsraum 4 ergebende, hohe Staudruck des Bremsdruckes durch den Druckluftversorgungskanal 17 zugeführt wird. Die Vorsteuerventile 10 vermögen daher Schaltdrücke entsprechend hohen Druckes auszusteuern und in die Beaufschlagungskammern 9 bzw. 16 einzuspeisen, wodurch die Membranglieder 7 bzw. 12 sicher in die volle, dichte Schließstellung des Absperrventils 8 bzw. des Entlüftungsventils 13 bewegt werden, auch falls die Membranglieder 7 bzw. 12 durch sehr niedrige Temperaturen relativ steif und damit in ihrer Bewegung schwergängig sein sollten.

Im übrigen entspricht der Aufbau und die Funktion des Gleitschutzventils den eingangs erwähnten, bekannten Gleitschutzventilen und braucht daher nicht weiter beschrieben zu werden.

Bezugszeichenliste

1. Eingangsanschluß
2. Ausgangsanschluß
3. Sieb
4. Eingangsraum
5. Drossel
6. Beaufschlagungskammer
7. Membranglied
8. Absperrventil
9. Beaufschlagungskammer
10. Vorsteuerventile
11. Zwischenraum
12. Membranglied
13. Entlüftungsventil
14. Drossel
15. Sieb
16. Beaufschlagungskammer
17. Druckluftversorgungskanal

**Ansprüche**

1. Gleitschutzventil für druckluftgebremste Fahrzeuge, insbesondere Schienenfahrzeuge, das in eine Verbindung von einer Bremsdruckquelle zu wenigstens einem Bremszylinder eingeordnet ist und welches nahe seines bremsdruckquellenseitigen Einganges eine seinen Durchströmungsquerschnitt begrenzende Drossel (5) und der Drossel (5) nachgeordnet ein Absperrventil (8) und ein Entlüftungsventil (13) aufweist, die beide von je einem Kolben- bzw. Membranglied (7 bzw. 12) schaltbar sind, wobei die Kolben- bzw. Membranglieder (7, 12) von durch Vorsteuerventile (10) gesteuerten Schaltdrücken beaufschlagbar sind und die Vorsteuerventile (10) aus einem bremsdruckquellenseitig vor dem Absperrventil (8) befindlichen Raum durch einen Druckluftversorgungskanal (17) druckluftversorgt sind, dadurch gekennzeichnet, daß der die Vorsteuerventile (10) mit Druckluft versorgende Druckluftversorgungskanal (17) an einen bremsdruckquellenseitig vor der Drossel (5) befindlichen Eingangsraum (4) angeschlossen ist.

2. Gleitschutzventil nach Anspruch 1, wobei einem bremsdruckquellenseitigen Eingangsanschluß (1) ein Sieb (3) nachgeordnet ist, dadurch gekennzeichnet, daß sich der Eingangsraum (4), an welchen der Druckluftversorgungskanal (17) angeschlossen ist, zwischen dem Sieb (3) und der Drossel (5) befindet.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | EP-A-0 304 610 (WABCO WESTINGHOUSE)<br>* Spalte 3, Zeile 40 - Spalte 6, Zeile 10; Figur 1 *<br>--- | 1 | B 60 T 8/36<br>B 60 T 8/34 |
| Y,D | DE-A-3 345 080 (KNORR-BREMSE)<br>* Seite 5, Zeile 33 - Seite 6, Zeile 6; Figur 2 * & EP-A-0 147 585 (Kat. Y)<br>--- | 1,2 | |
| Y | EP-A-0 154 214 (KNORR-BREMSE)<br>* Insgesamt *<br>--- | 1,2 | |
| A | EP-A-0 204 865 (MAGNETI MARELLI)<br>* Seite 9, Zeilen 12-16; Figur 6 *<br>----- | 1 | |
| | | | **RECHERCHIERTE SACHGEBIETE (Int. Cl.5)**<br><br>B 60 T |

Der vorliegende Recherchenbericht wurde für alle Patentansprüche erstellt

| Recherchenort | Abschlußdatum der Recherche | Prüfer |
|---|---|---|
| DEN HAAG | 04-09-1989 | MEIJS P.C.J. |